# EUROPÄISCHE PATENTSCHRIFT

(11) **EP 3 596 897 B1**
(45) Veröffentlichungstag und Bekanntmachung des Hinweises auf die Patenterteilung: **24.05.2023**
(21) Anmeldenummer: 18711895.5
(22) Anmeldetag: 14.03.2018
(51) Int. Cl.: H04L 7/00

(54) **AUTHENTISIERTE BESTÄTIGUNGS- UND AKTIVIERUNGSNACHRICHT**
AUTHENTICATED CONFIRMATION AND ACTIVATION MESSAGE
MESSAGE DE CONFIRMATION ET D'ACTIVATION AUTHENTIFIÉ

(30) Priorität: 14.03.2017 DE 102017204184
(43) Veröffentlichungstag der Anmeldung: 22.01.2020
(73) Patentinhaber: Fraunhofer-Gesellschaft zur Förderung der angewandten Forschung e.V., 80686 München (DE)
(72) Erfinder: KILIAN, Gerd, 91056 Erlangen (DE); BERNHARD, Josef, 92507 Nabburg (DE); MEYER, Raimund, 90765 Fürth (DE); SOLLER, Dominik, 90571 Schwaig (DE); KNEISSL, Jakob, 90765 Fürth (DE); WECHSLER, Johannes, 91174 Spalt (DE); OBERNOSTERER, Frank, 90411 Nürnberg (DE)
(74) Vertreter: Schlenker, Julian
(86) Internationale Anmeldenummer: PCT/EP2018/056386
(87) Internationale Veröffentlichungsnummer: WO 2018/167145

(56) Entgegenhaltungen:
- WO-A1-2016/131056
- WO-A2-2013/013168
- DE-A1-102010 043 151
- DE-A1-102011 082 098
- US-A1- 2008 065 936
- US-A1- 2014 310 784
- SEDDIGH N ET AL: "Security advances and challenges in 4G wireless networks", PRIVACY SECURITY AND TRUST (PST), 2010 EIGHTH ANNUAL INTERNATIONAL CONFERENCE ON, IEEE, PISCATAWAY, NJ, USA, 17. August 2010 (2010-08-17), Seiten 62-71, XP031769462, ISBN: 978-1-4244-7551-3

## Beschreibung

Ausführungsbeispiele beziehen sich auf einen Datensender und ein Verfahren zum Senden von Daten. Weitere Ausführungsbeispiele beziehen sich auf einen Datenempfänger und ein Verfahren zum Empfangen von Daten. Manche Ausführungsbeispiele beziehen sich auf einen Datensender zum Senden einer authentisierten Bestätigungs- und Aktivierungsnachricht, und auf einen Datenempfänger zum Empfangen derselben.

Um in einem digitalen Funkübertragungssystem ein Empfangssignal hinsichtlich Zeitlage, Frequenz, Phase und Abtastphase synchronisieren zu können sowie den in der Regel unbekannten Funkkanal schätzen und entzerren zu können, basiert das Sendesignal (Wellenform) neben unbekannten Datensymbolen in der Regel auch auf Synchronisationssymbolen. Diese Symbole sind im Empfänger vorab bekannt und werden oftmals auch als Trainings-, Pilot-, Referenz-, Präambel- oder Midambelsymbole bezeichnet. Sie tragen üblicherweise keine (dem Empfänger) unbekannte Information und sind daher von den eigentlich informationstragenden Datensymbolen abzugrenzen. In aktuellen Mobilfunksystemen basierend auf den Standards GSM, UMTS und LTE sind die Synchronisationssymbole beispielsweise in den entsprechenden Standarddokumenten definiert, siehe z.B. 3rd Generation Partnership Project 3GPP TS 45.002, "Multiplexing and multiple access on the radio path", 3rd Generation Partnership Project 3GPP TS 25.211, "Physical channels and mapping of transport channels onto physical channels (FDD)", 3rd

Generation Partnership Project 3GPP TS 36.211, "Physical channels and modulation".

Während die im Empfänger vorab bekannten Synchronisationssymbole lediglich der Synchronisation und/oder Kanalschätzung im Empfänger dienen, benötigt die Prüfung der Authentizität einer Nachricht die in der Nachricht übertragenen Daten selbst. Oftmals kommt hierbei z.B. eine sogenannte CMAC-Sequenz (CMAC = cipher-based message authentication code, dt. Chiffre basierter Nachrichtenauthentifizierungscode) zum Einsatz. Synchronisation und Authentifizierung sind somit voneinander getrennt.

Die Druckschrift DE 10 2011 082 098 B1 zeigt eine batteriebetriebene stationäre Sensoranordnung mit unidirektionaler Datenübertragung, die zur Datenübertragung ein Telegrammaufteilungsverfahren verwendet.

In der Druckschrift WO 2015/128385 A1 wird eine Datensendeanordnung mit einer auf einem Energy-Harvesting-Element basierenden Energieversorgungseinrichtung beschrieben.

In der Veröffentlichung G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013, wird eine verbesserte Sende/Empfangsleistung für Niedrigenergietelemetriesysteme beschrieben, die ein Telegrammaufteilungsverfahren verwenden.

In der Veröffentlichung G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015, wird eine verbesserung der Übertragungszuverlässigkeit von Telemetriesystemen beschrieben, die ein Telegrammaufteilungsverfahren verwenden.

Die Druckschrift US 2008/065936 A1 beschreibt ein Verfahren und ein System zur Decodierung eines empfangenen Datenstroms, wobei ein geeignetes Zeitintervall zur Decodierung des empfangenen Datenstroms vom empfangenen Datenstrom abgeleitet wird. Im Detail wird ein Header des empfangenen Datenstroms analysiert, um zwei Sätze von Zeitspannen zu bestimmen, wobei jeder Satz von Zeitspannen mit einem Satz von möglichen Datenübertragungsintervallen korrespondiert.

Die Druckschrift WO 2013/013168 A2 beschreibt ein mobiles Onlinebankingsystem mit einem kryptographischen Erweiterungsgerät.

Die Druckschrift DE 10 2010 043151 A1 beschreibt einen Datensender, der ein Datenpaket erzeugt wobei das Datenpaket eine erste Referenzsequenz und eine zweite Referenzsequenz aufweist, wobei die erste Referenzsequenz doppelt so lang wie die zweite Referenzsequenz ist.

Die Druckschrift WO 2016/131056 A1 beschreibt ein System und Verfahren zur Verwaltung einer vertraulichen Kommunikation.

In der Veröffentlichung SEDDIGH N ET AL: "Security advances and challenges in 4G wireless networks", PRIVACY SECURITY AND TRUST (PST), 2010 EIGHTH ANNUAL INTERNATIONAL CONFERENCE ON, IEEE, PISCATAWAY, NJ, USA, 17. August 2010,

Seiten 62-71, werden Sicherheitsmechanismen von 4G Netzen beschrieben Der vorliegenden Erfindung liegt somit die Aufgabe zugrunde, den zur Authentizitätsprüfung erforderlichen Overhead einer Nachricht zu reduzieren.

Diese Aufgabe wird durch die unabhängigen Patentansprüche gelöst.

Vorteilhafte Weiterbildungen finden sich in den abhängigen Patentansprüchen. Ausführungsbeispiele schaffen einen Datensender zum Senden von Daten an einen Datenempfänger, wobei dem Datensender und dem Datenempfänger eine individuelle Kommunikationsinformation bekannt ist, wobei der Datensender ausgebildet ist, um eine individuelle Synchronisationssequenz unter Verwendung der individuellen Kommunikationsinformation zu generieren, und um ein zu sendendes Datenpaket mit der individuellen Synchronisationssequenz zur Synchronisation des Datenpakets in dem Datenempfänger zu versehen, wobei die individuelle Kommunikationsinformation eine den Datensender authentisierende Information und/oder ein Datenpaket des Datensenders authentisierende Information ist, wobei die individuelle Kommunikationsinformation nur
- dem Datensender und dem Datenempfänger, oder
- dem Datensender und einer Gruppe von Datenempfängern
bekannt ist.
Ausführungsbeispiele schaffen einen Datenempfänger zum Empfangen von Daten von einem Datensender, die von dem Datensender in einem Datenpaket gesendet werden, wobei das Datenpaket mit einer individuellen Synchronisationssequenz versehen ist, die unter Verwendung einer individuellen Kommunikationsinformation erzeugt ist, die dem Datensender und dem Datenempfänger bekannt ist, wobei der Datenempfänger ausgebildet ist, um eine individuelle Referenz-Synchronisationssequenz unter Verwendung der Kommunikationsinformation zu generieren, und um das zu empfangene Datenpaket unter Verwendung der individuellen Referenz-Synchronisationssequenz in einem Empfangsdatenstrom oder Empfangsdatenpuffer zu detektieren, wobei die individuelle Kommunikationsinformation eine den Datensender authentisierende Information und/oder ein Datenpaket des Datensenders authentisierende Information ist, wobei die individuelle Kommunikationsinformation nur
- dem Datensender und dem Datenempfänger, oder
- dem Datensender und einer Gruppe von Datenempfängern
bekannt ist.

Der vorliegenden Erfindung liegt die Idee zugrunde, für die Kommunikation zwischen dem Datensender und dem Datenempfänger anstelle einer herkömmlichen Synchronisationssequenz, die allen oder mehreren nicht gezielt ausgewählten Teilnehmern (Datensendern und Datenempfängern) eines Kommunikationssystems bekannt ist, eine individuelle Synchronisationssequenz zu verwenden, die von einer individuellen Kommunikationsinformation (z.B. einer Signatur) abgeleitet ist, die nur dem Datensender und dem Datenempfänger (oder einer beschränkten Gruppe von Datensendern und/oder Datenempfängern) bekannt ist oder ihnen für die gegenseitige Kommunikation individuell zugeordnet ist.

Weitere Ausführungsbeispiele schaffen ein Verfahren zum Senden von Daten an einen Datenempfänger. Das Verfahren umfasst einen Schritt des Generierens einer individuellen Synchronisationssequenz unter Verwendung einer individuellen Kommunikationsinformation, die dem Datensender und dem Datenempfänger bekannt ist. Ferner umfasst das Verfahren einen Schritt des Versehens eines zu sendenden Datenpakets mit der individuellen Synchronisationssequenz zur Synchronisation des Datenpakets in dem Datenempfänger. Ferner umfasst das Verfahren einen Schritt des Sendens des Datenpakets mit der individuellen Synchronisationssequenz zur Synchronisation des Datenpakets in dem Datenempfänger, wobei die individuelle Kommunikationsinformation eine den Datensender authentisierende Information und/oder ein Datenpaket des Datensenders authentisierende Information ist, wobei die individuelle Kommunikationsinformation nur
- dem Datensender und dem Datenempfänger, oder
- dem Datensender und einer Gruppe von Datenempfängern
bekannt ist.

Weitere Ausführungsbeispiele schaffen ein Verfahren zum Empfangen von Daten von einem Datensender, die von dem Datensender in einem Datenpaket gesendet werden, wobei das Datenpaket mit einer individuellen Synchronisationssequenz versehen ist, die unter Verwendung einer individuellen Kommunikationsinformation erzeugt ist, die dem Datensender und dem Datenempfänger bekannt ist. Das Verfahren umfasst einen Schritt des Generierens einer individuellen Referenz-Synchronisationssequenz unter Verwendung der individuellen Kommunikationsinformation. Ferner umfasst das Verfahren einen Schritt des Detektierens des Datenpakets in einem Empfangsdatenstrom oder Empfangsdatenpuffer unter Verwendung der individuellen Referenz-Synchronisationssequenz. Ferner umfasst das Verfahren einen Schritt des Empfangens des detektieren Datenpakets, wobei die individuelle Kommunikationsinformation eine den Datensender authentisierende Information und/oder ein Datenpaket des Datensenders authentisierende Information ist, wobei die individuelle Kommunikationsinformation nur
- dem Datensender und dem Datenempfänger, oder
- dem Datensender und einer Gruppe von Datenempfängern
bekannt ist.

Weitere Ausführungsbeispiele schaffen ein Verfahren zum Senden einer authentisierten Empfangsbestätigung, die den Empfang eines vorausgehenden Datenpakets bestätigt, welches von einem ersten Teilnehmer eines Kommunikationssystems gesendet wird. Das Verfahren umfasst einen Schritt des Empfangens des vorausgehenden Datenpakets von einem zweiten Teilnehmer des Kommunikationssystems. Ferner umfasst das Verfahren einen Schritt des Sendens eines Datenpakets mit einer individuellen Synchronisationssequenz von dem zweiten Teilnehmer an den ersten Teilnehmer bei einem erfolgreichen Empfang des vorausgehenden Datenpakets, wobei die individuelle Synchronisationssequenz aus einer individuellen Kommunikationsinformation generiert ist, die dem ersten Teilnehmer und den zweiten Teilnehmer individuell für die gegenseitige Kommunikation zugeordnet ist, wobei die individuelle Kommunikationsinformation eine den Datensender authentisierende Information und/oder ein Datenpaket des Datensenders authentisierende Information ist, wobei die individuelle Kommunikationsinformation nur
- dem Datensender und dem Datenempfänger, oder
- dem Datensender und einer Gruppe von Datenempfängern
bekannt ist.

Ausführungsbeispiele der vorliegenden Erfindung werden bezugnehmend auf die beiliegenden Figuren näher beschrieben. Es zeigen:
- Fig. 1: ein schematisches Blockschaltbild eines Systems mit einem Datensender und einem Datenempfänger;
- Fig. 2: in einem Diagramm eine Belegung des Übertragungskanals bei der Übertragung einer Mehrzahl von Teildatenpaketen entsprechend einem Zeit- und Frequenzsprungmuster;
- Fig. 3: einen schematischen Kommunikationsablauf zwischen einem Datensender und einem Datenempfänger;
- Fig. 4: a)eine schematische Ansicht einer ersten Anordnung von Synchronisationssymbolen und Datensymbolen in einem Datenpaket oder Teildatenpaket, bei der ein Block mit den Synchronisationssymbolen einem Block mit den Datensymbolen vorangestellt ist;
b)zeigt eine schematische Ansicht einer zweiten Anordnung von Synchronisationssymbolen und Datensymbolen in einem Datenpaket oder Teildatenpaket, bei der ein Block von Datensymbolen zwischen zwei Blöcken von Synchronisationssymbolen angeordnet ist;
c)zeigt eine schematische Ansicht einer dritten Anordnung von Synchronisationssymbolen und Datensymbolen in einem Datenpaket oder Teildatenpaket, bei der ein Block von Synchronisationssymbolen zwischen zwei Blöcken von Datensymbolen angeordnet ist;
d)zeigt eine schematische Ansicht einer vierten Anordnung von Synchronisationssymbolen und Datensymbolen in einem Datenpaket oder Teildatenpaket, bei der Blöcke von Datensymbolen und Blöcke von Synchronisationssymbolen abwechselnd in dem Datenpaket oder Teildatenpaket angeordnet sind;

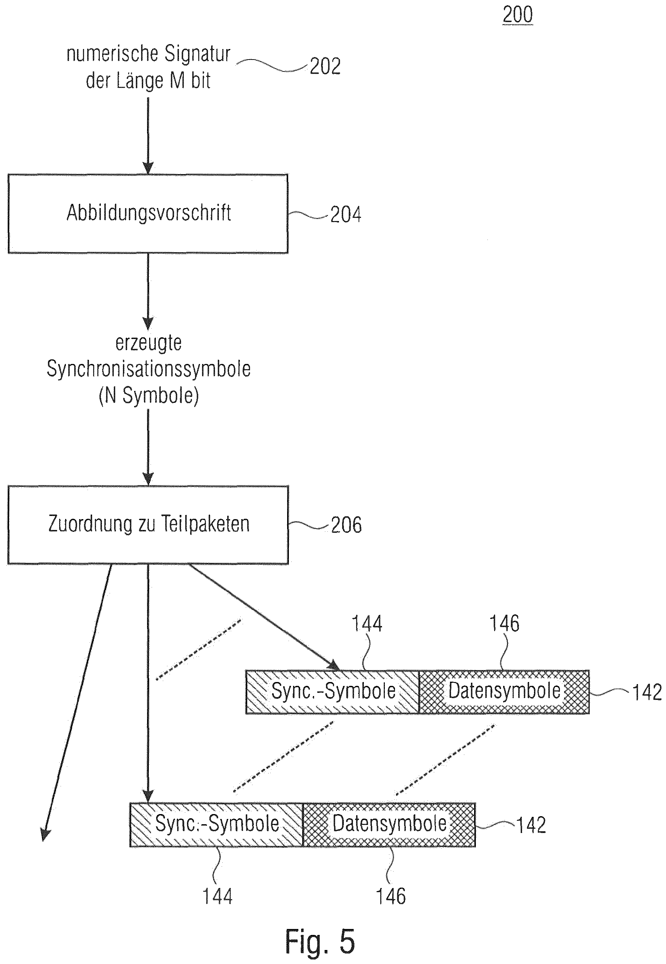

- Fig. 5: zeigt in einem Flussdiagramm ein Verfahren zum Erzeugen der Synchronisationssymbole der individuellen Synchronisationssequenz;

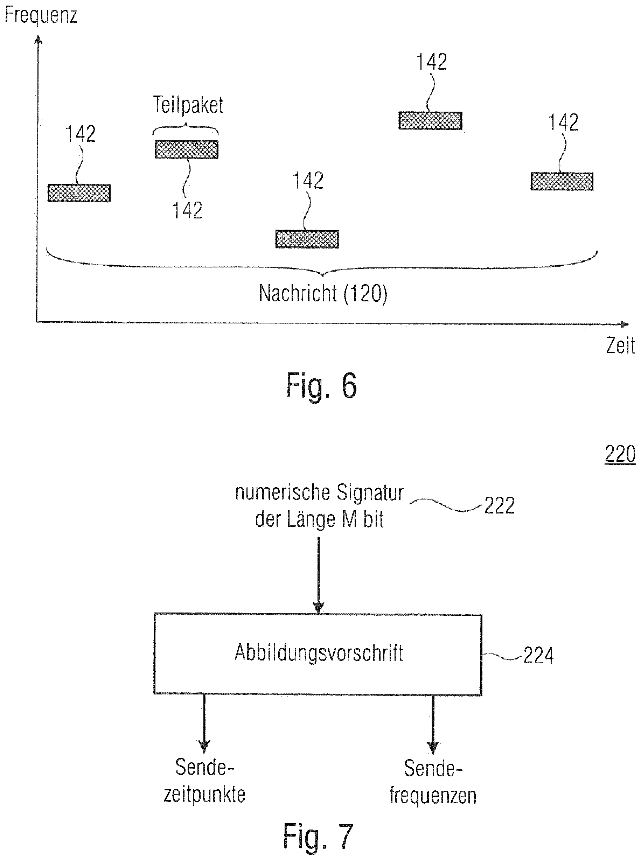

- Fig. 6: zeigt in einem Diagramm eine Belegung des Übertragungskanals bei der Übertragung eines Datenpakets mittels einer Mehrzahl von Teildatenpakete, die in der Zeit und Frequenz verteilt sind;
- Fig. 7: zeigt ein in einem Flussdiagramm ein Verfahren zum Generieren eines Zeit- und/oder Frequenzsprungmusters;

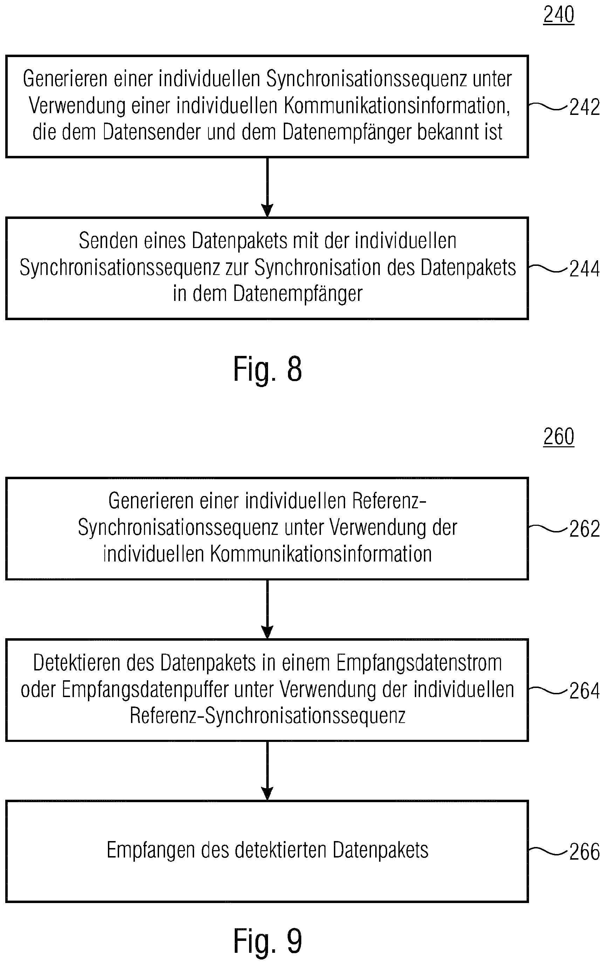

- Fig. 8: zeigt ein Flussdiagramm eines Verfahrens zum Senden von Daten an einen Datenempfänger; und
- Fig. 9: zeigt ein Flussdiagramm eines Verfahrens zum Empfangen von Daten von einem Datensender.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

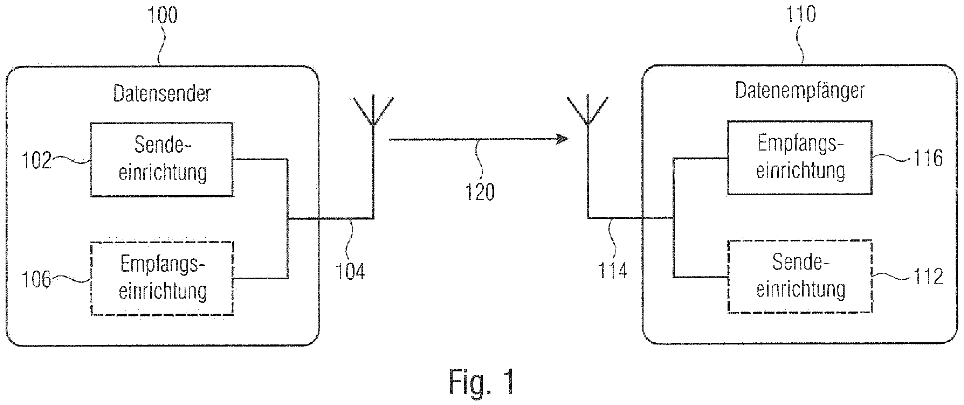

Fig. 1 zeigt ein schematisches Blockschaltbild eines Systems mit einem Datensender 100 und einem Datenempfänger 110.

Dem Datensender 100 und dem Datenempfänger 110 ist eine individuelle Kommunikationsinformation bekannt.

Der Datensender 100 ist ausgebildet, um eine individuelle Synchronisationssequenz unter Verwendung der individuellen Kommunikationsinformation zu generieren, und um ein zu sendendes Datenpaket 120 mit der individuellen Synchronisationssequenz zur Synchronisation des Datenpakets 120 in dem Datenempfänger 110 zu versehen, und um das Datenpaket 120 an den Datenempfänger 110 zu senden.

Der Datenempfänger 110 ist ausgebildet, um eine individuelle Referenz-Synchronisationssequenz unter Verwendung der Kommunikationsinformation zu generieren, und um das zu empfangene Datenpaket 120 unter Verwendung der individuellen Referenz-Synchronisationssequenz in einem Empfangsdatenstrom oder Empfangsdatenpuffer zu detektieren.

Beispielsweise kann die individuelle Kommunikationsinformation individuell für die Kommunikation zwischen dem Datensender 100 und dem Datenempfänger 110 sein. So kann die individuelle Kommunikationsinformation dem Datensender 100 und dem Datenempfänger individuell zugeordnet sein, z.B. durch den Datensender oder den Datenempfänger oder durch eine andere Einheit des Kommunikationssystems, wie z.B. einem anderen Datensender oder Datenempfänger oder einer zentralen Steuereinheit. Die individuelle Kommunikationsinformation kann individuell für die Kommunikation zwischen dem Datensender 100 und dem Datenempfänger hinsichtlich des Datenpakets 120 sein, z.B. nur für die Kommunikation zwischen dem Datensender 100 und dem Datenempfänger 110 (oder einer Gruppe von Datenempfängern) verwendet werden (und nicht für die Kommunikation mit einem anderen Datensender oder einem anderen Datenempfänger (oder einer anderen Gruppe von Datenempfängern)). So ist es möglich, dass die individuelle Kommunikationsinformation nur dem Datensender 100 und dem Datenempfänger 110 (oder der Gruppe von Datenempfängern) bekannt ist.

Der Datensender 100 und der Datenempfänger 110 können die individuelle Synchronisationssequenz bzw. die individuelle Referenz-Synchronisationssequenz unter Verwendung der individuellen Kommunikationsinformation so erzeugen (z.B. unter Verwendung des gleichen Algorithmus oder der gleichen Abbildungs- bzw. Ableitungsvorschrift), dass die individuelle Synchronisationssequenz und die individuelle Referenz-Synchronisationssequenz gleich sind. So kann der Datenempfänger 110 die individuelle Synchronisationssequenz (und damit das Datenpaket 120) in dem Empfangsdatenstrom beispielsweise durch Korrelation des Empfangsdatenstroms mit der Referenz-Synchronisationssequenz detektieren (oder finden).

Durch die individuelle Synchronisationssequenz kann der Datensender 100 den Datenempfänger 110 ansprechen (oder auswählen, oder adressieren), während der Datenempfänger anhand der individuellen Synchronisationssequenz ermitteln kann, ob er durch diese angesprochen (oder ausgewählt, oder adressiert) wird.

Wie in Fig. 1 beispielhaft gezeigt ist, kann der Datensender 100 eine Sendeeinrichtung (oder Sendemodul, oder Transmitter) 102 aufweisen, die ausgebildet ist, um das Datenpaket 120 zu senden. Die Sendeeinrichtung 102 kann mit einer Antenne 104 des Datensenders 100 verbunden sein. Der Datensender 100 kann ferner eine Empfangseinrichtung (oder Empfangsmodul, oder Receiver) 106 aufweisen, die ausgebildet ist, um ein Datenpaket zu empfangen. Die Empfangseinrichtung 106 kann mit der Antenne 104 oder einer weiteren (separaten) Antenne des Datensenders 100 verbunden sein. Der Datensender 100 kann auch eine kombinierte Sendeempfangseinrichtung (Transceiver) aufweisen.

Der Datenempfänger 110 kann eine Empfangseinrichtung (oder Empfangsmodul, oder Receiver) 116 aufweisen, die ausgebildet ist, um das Datenpaket 120 zu empfangen. Die Empfangseinrichtung 116 kann mit einer Antenne 114 des Datenempfängers 110 verbunden sein. Ferner kann der Datenempfänger 110 eine Sendeeinrichtung (oder Sendemodul, oder Transmitter) 112 aufweisen, die ausgebildet ist, um ein Datenpaket zu senden. Die Sendeeinrichtung 112 kann mit der Antenne 114 oder einer weiteren (separaten) Antenne des Datenempfängers 110 verbunden sein. Der Datenempfänger 110 kann auch eine kombinierte Sendeempfangseinrichtung (Transceiver) aufweisen.

Bei Ausführungsbeispielen kann der Datensender 100 ein Sensorknoten sein, während der Datenempfänger 110 eine Basisstation sein kann. Typischerweise umfasst ein Kommunikationssystem zumindest einen Datenempfänger 110 (Basisstation) und eine Vielzahl von Datensendern (Sensorknoten, wie z.B. Heizungszähler). Natürlich ist es auch möglich, dass der Datensender 100 eine Basisstation ist, während der Datenempfänger 110 ein Sensorknoten ist. Ferner ist es möglich, dass sowohl der Datensender 100 als auch der Datenempfänger 110 Sensorknoten sind. Des Weiteren ist es möglich, dass sowohl der Datensender 100 als auch der Datenempfänger 110 Basisstationen sind.

Der Datensender 100 und der Datenempfänger 110 können optional ausgebildet sein, um das Datenpaket 120 unter Verwendung des Telegram-Splitting-Verfahrens (dt. Telegrammaufteilungsverfahrens) zu senden bzw. zu empfangen. Hierbei wird das Datenpaket 120 in eine Mehrzahl von Teildatenpaketen (oder Teilpaketen) aufgeteilt und die Teildatenpakete in der Zeit verteilt und/oder in der Frequenz verteilt von dem Datensender zu dem Datenempfänger übertragen, wobei der Datenempfänger die Teildatenpakete wieder zusammenfügt (oder kombiniert), um das Datenpaket 120 zu erhalten. Jedes der Teildatenpakete enthält dabei nur einen Teil des Datenpakets 120. Das Datenpaket 120 kann kanalcodiert sein, so dass zum fehlerfreien Decodieren des Datenpakets nicht alle Teildatenpakete sondern nur ein Teil der Teildatenpakete erforderlich ist.

Die zeitliche Verteilung der Mehrzahl von Teildatenpaketen kann entsprechend einem Zeitsprungmuster erfolgen. Das Zeitsprungmuster kann eine Abfolge von Sendezeitpunkten oder Sendezeitabständen angeben, mit denen die Teildatenpakete gesendet werden. Beispielsweise kann ein erstes Teildatenpaket zu einem ersten Sendezeitpunkt (oder in einem ersten Sendezeitschlitz) und ein zweites Teildatenpaket zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben. Zwischen den Teildatenpaketen können Sendepausen vorhanden sein in denen nicht gesendet wird. Die Teildatenpakete können sich auch zeitlich überlappen (überschneiden).

Die Verteilung in der Frequenz der Mehrzahl von Teildatenpakete kann entsprechend einem Frequenzsprungmuster erfolgen. Das Frequenzsprungmuster kann eine Abfolge von Sendefrequenzen oder Sendefrequenzsprüngen angeben, mit denen die Teildatenpakete gesendet werden. Beispielsweise kann ein erstes Teildatenpaket mit einer ersten Sendefrequenz (oder in einem ersten Frequenzkanal) und ein zweites Teildatenpaket mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Natürlich können die Mehrzahl von Teildatenpakete auch sowohl in der Zeit- als auch in der Frequenz verteilt von dem Datensender 100 zu dem Datenempfänger 110 übertragen werden. Die Verteilung der Mehrzahl von Teildatenpakete in der Zeit und in der Frequenz kann entsprechend einem Zeit- und Frequenzsprungmuster erflogen. Ein Zeit- und Frequenzsprungmuster kann die Kombination aus einem Zeitsprungmuster und einem Frequenzsprungmuster sein, d.h. eine Abfolge von Sendezeitpunkten oder Sendezeitabständen mit denen die Teildatenpakete übertragen werden, wobei den Sendezeitpunkten (oder Sendezeitabständen) Sendefrequenzen (oder Sendefrequenzsprünge) zugeordnet sind.

Das für die Übertragung der Mehrzahl von Teildatenpaketen verwendete Zeit- und/oder Frequenzsprungmuster kann von dem Datensender 100 und dem Datenempfänger 110 unter Verwendung der individuellen Kommunikationsinformation generiert werden. So kann auch das verwendete Zeit- und/oder Frequenzsprungmuster ein individuelles Zeit- und/oder Frequenzsprungmuster sein, d.h. individuell für die Kommunikation zwischen dem Datensender 100 und dem Datenempfänger 110 oder individuell für das Datenpaket 120.

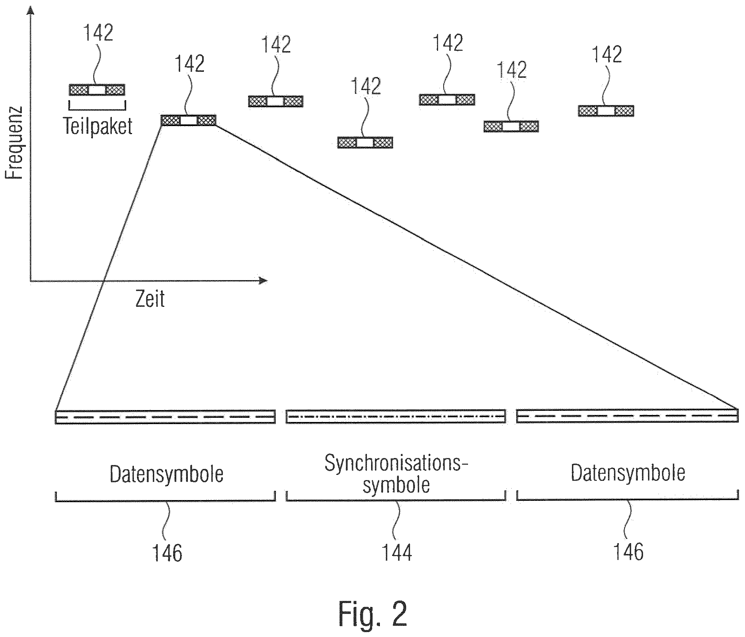

Fig. 2 zeigt in einem Diagramm eine Belegung des Übertragungskanals bei der Übertragung einer Mehrzahl von Teildatenpaketen 142 entsprechend einem Zeit- und Frequenzsprungmuster. Dabei beschreibt die Ordinate die Frequenz und die Abszisse die Zeit.

Wie in Fig. 2 zu erkennen ist, kann das Datenpaket 120 beispielhaft auf n = 7 Teildatenpakete 142 aufgeteilt werden und entsprechend eines Zeit- und Frequenzsprungmusters verteilt in der Zeit und der Frequenz von dem Datensender 100 zu dem Datenempfänger 110 übertragen werden.

Wie in Fig. 2 weiter zu erkennen ist, kann auch die individuelle Synchronisationssequenz 144 auf die Mehrzahl von Teildatenpakete 142 aufgeteilt werden, so dass die Mehrzahl von Teildatenpakete 142 neben Daten (Datensymbole in Fig. 2) 146 jeweils einen Teil der individuellen Synchronisationssequenz (Synchronisationssymbole in Fig. 2) 144 enthalten.

Im Folgenden werden detaillierte Ausführungsbeispiele des Datensenders 100 und Datenempfängers 110 näher beschrieben. Die Verwendung des Telegram-Splitting Verfahrens ist dabei rein optional, d.h. das Datenpaket 120 kann zwischen Datensender 100 und Datenempfänger 110 sowohl direkt (oder am Stück, oder als Ganzes) als auch auf die Mehrzahl von Teildatenpakete 142 aufgeteilt übertragen werden.

### Erstes detailliertes Ausführungsbeispiel

Das Datenpaket 120 mit der individuellen Synchronisationssequenz kann eine Bestätigungsnachricht sein, die zur Bestätigung eines Zustandes oder Ereignisses von dem Datensender 100 ausgesendet wird.

Dadurch, dass die individuelle Synchronisationssequenz individuell für die Kommunikation zwischen dem Datensender 100 und dem Datenempfänger 110 ist, kann der Datenempfänger 110 sicher sein, dass das Datenpaket 120 tatsächlich von dem Datensender 100 stammt.

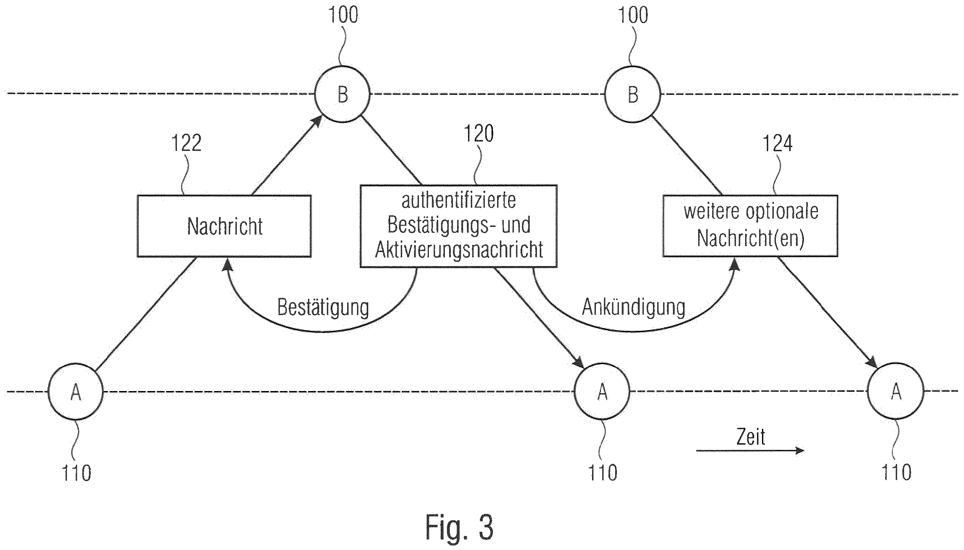

Beispielsweise kann der Datensender 100 ausgebildet sein, um das Datenpaket 120 mit der individuellen Synchronisationssequenz ansprechend auf den erfolgreichen Empfang eines vorherigen Datenpakets (=Ereignis) auszusenden. Das Datenpaket 120 mit der individuellen Synchronisationssequenz kann also bedingt durch die individuelle Synchronisationssequenz eine Bestätigungsnachricht sein, mit der der Datensender 100 den erfolgreichen Empfang des vorherigen Datenpakets bestätigt. Dieses Beispiel wird nachfolgend anhand von Fig. 3 weiter erläutert.

Fig. 3 zeigt einen schematischen Kommunikationsablauf zwischen dem Datensender 100 (Teilnehmer A) und dem Datenempfänger 110 (Teilnehmer B). Hierbei wird davon ausgegangen, dass sowohl Datensender 100 als auch Datenempfänger 110 Sendeempfänger sind.

In einem ersten Schritt sendet der Teilnehmer A 110 eine Nachricht (z.B. ein Datenpaket) 122 zu dem Teilnehmer B 100. In einem zweiten Schritt sendet der Teilnehmer B 100 eine Bestätigungsnachricht (=Datenpaket 120 mit der individuellen Synchronisationssequenz) zu dem Teilnehmer A 110. Mit der Bestätigungsnachricht bestätigt der Teilnehmer B 100 den Empfang der Nachricht 122. Optional kann der Teilnehmer B 100 zusammen mit der Bestätigungsnachricht eine Aktivierungsnachricht zu dem Teilnehmer A 110 senden. Der Teilnehmer B 100 kann das Datenpaket 120 also ferner mit einer Aktivierungsinformation versehen, wobei die Aktivierungsinformation einen Sendezeitpunkt zumindest eines weiteren Datenpakets und/oder eine Strukturinformation (z.B. Zeit- und/oder Frequenzsprungmuster) des zumindest einen weiten Datenpakets angeben kann. In einem dritten Schritt kann der Teilnehmer B 100 zumindest eine weitere optionale Nachricht (z.B. zumindest ein weiteres Datenpaket) 124 zu dem Teilnehmer A 110 entsprechend der vorherigen Aktivierungsinformation senden.

Bei Ausführungsbeispielen erfolgt also eine Verknüpfung von Authentisierung der Nachricht mit der Synchronisationssequenz. Die Authentisierung der Nachricht kann durch Senden einer individuellen, dynamisch berechneten Symbolsequenz erfolgen, welche dem Datenempfänger 110 vorab bekannt ist und welche gleichzeitig als Synchronisationssequenz für den Datenempfänger 110 dient. Damit entfällt das Aussenden von festen Synchronisationssymbolen, welche z.B. in einem Standard oder einer Wellenformspezifikation vorab definiert sind.

Voraussetzung für die Anwendung des Verfahrens ist eine individuelle Kommunikationsinformation, z.B. eine der aktuellen Übertragung vorausgehende Kommunikation zwischen Datensender 100 und Datenempfänger 110, aus welcher beide Teilnehmer nach einem für beide Teilnehmer bekannten Verfahren eine individuelle Kommunikationsinformation, z.B. eine numerische (z.B. binäre) Signatur oder eine CRC oder ein Teil der übertragenen Daten, z.B. in Form einer CMAC, ableiten können. Aus dieser Signatur können die Symbole der Synchronisationssequenz nach einem geeigneten Verfahren berechnet werden.

Neben der authentisierten Empfangsbestätigung kann mit der Nachricht die Übermittlung weiterer Information, welche dem Datenempfänger der Empfangsbestätigung nicht vorab bekannt sind, optional erfolgen. Dieser Teil der Nachricht kann in Abgrenzung zur Synchronisationssequenz als Datensequenz bezeichnet werden. Beispielsweise kann dem Datenempfänger mitgeteilt werden, zu welchem Zeitpunkt er mit einer neuen Datenübertragung seitens des Datensenders rechnen kann und welche Länge (z.B. Paketlänge), welches Struktur, welches Sprungmuster oder weitere Parameter die neuerliche Datenübertragung hat, sodass der Datenempfänger, ggf. nach einer Ruhepause, zum geeigneten Zeitpunkt wieder in Empfangsbereitschaft gehen kann.

### Zweites detailliertes Ausführungsbeispiel

Die authentisierte Empfangsbestätigung kann in Form einer Nachricht gesendet werden, welche aus einem oder optional mehreren zusammengehörigen Teildatenpaketen ("Telegram Splitting") 142 besteht (vgl. Fig. 2). Für den optionalen Fall des Telegramm-Splitting kann die Aussendung der Teildatenpakete 142 gemäß den zugeordneten Größen "Sendezeit" und/oder "Sendefrequenz" geschehen.

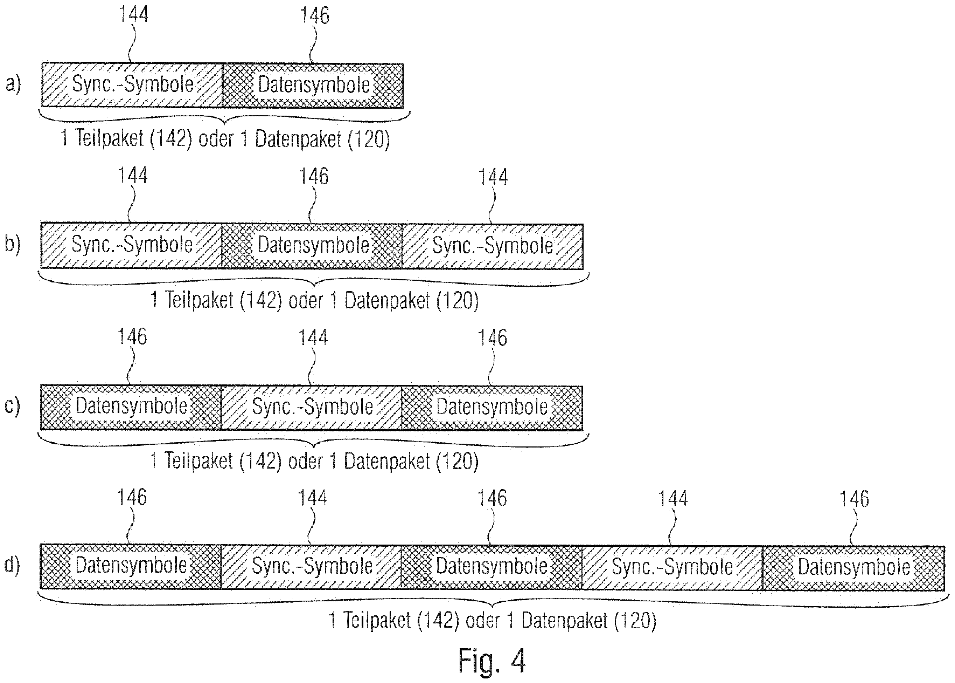

Das Datenpaket 120 (Nachricht) kann zwei grundsätzlich voneinander unterscheidbare Symbolarten enthalten. Im Datenempfänger 110 vorab bekannte Synchronisationssymbole und im Datenempfänger 110 vorab unbekannte Datensymbole. Die genaue Anordnung der o.g. Symbole zueinander, z.B. in Form von Symbolblöcken, ist dabei unerheblich. Fig. 4 in Ausführung a) bis d), von nun an auch als Fig.4a bis 4d bezeichnet, veranschaulichen beispielhaft mehrere Optionen für den Aufbau des Datenpakets (Nachricht) oder der Teildatenpakete 142 des Datenpakets. Zahlreiche weitere Anordnungen sind denkbar, insbesondere auch Verschränkungen von Synchronisations- und Datensymbolen. Für den Fall des Telegramm-Splitting kann jedes Teildatenpaket 142 einer Nachricht unterschiedliche Synchronisationssymbolsequenzen enthalten. Dies ist vorteilhaft, jedoch nicht zwingend erforderlich.

Im Detail zeigt Fig. 4a eine schematische Ansicht einer ersten Anordnung von Synchronisationssymbolen 144 und Datensymbolen 146 in einem Datenpaket 120 oder Teildatenpaket 142, bei der ein Block mit den Synchronisationssymbolen 144 einem Block mit den Datensymbolen 146 vorangestellt ist.

Fig. 4b zeigt eine schematische Ansicht einer zweiten Anordnung von Synchronisationssymbolen 144 und Datensymbolen 146 in einem Datenpaket 120 oder Teildatenpaket 142, bei der ein Block von Datensymbolen 146 zwischen zwei Blöcken von Synchronisationssymbolen 144 angeordnet ist (zweigeteilte Synchronisationssequenz).

Fig. 4c zeigt eine schematische Ansicht einer dritten Anordnung von Synchronisationssymbolen 144 und Datensymbolen 146 in einem Datenpaket 120 oder Teildatenpaket 142, bei der ein Block von Synchronisationssymbolen 144 zwischen zwei Blöcken von Datensymbolen 146 angeordnet ist.

Fig. 4d zeigt eine schematische Ansicht einer vierten Anordnung von Synchronisationssymbolen 144 und Datensymbolen 146 in einem Datenpaket 120 oder Teildatenpaket 142, bei der Blöcke von Datensymbolen 146 und Blöcke von Synchronisationssymbolen 144 abwechselnd in dem Teildatenpaket angeordnet sind.

Die Synchronisationssymbole einer authentisierten Empfangsbestätigung (individuelle Synchronisationssequenz) können im Datensender 100 und im adressierten Datenempfänger 110 gleichermaßen bekannt sein. Die Berechnung der Synchronisationssymbole kann auf Basis einer im Datensender 100 und Datenempfänger 110 bekannten individuellen Kommunikationsinformation (z.B. (numerischen) Signatur) erfolgen, z.B. in Form einer CMAC. Das Prinzip ist in der folgenden Fig. 5 dargestellt.

Fig. 5 zeigt in einem Flussdiagramm ein Verfahren 200 zum Erzeugen der Synchronisationssymbole. In einem ersten Schritt 202 wird die individuelle Kommunikationsinformation bereitgestellt, z.B. von dem Datensender 100, dem Datenempfänger 110 oder einem anderen Teilnehmer des Kommunikationssystems, wie z.B. einem anderen Datensender oder Datenempfänger oder einer zentralen Steuereinheit. In einem zweiten Schritt 204 wird eine Abbildungsvorschrift auf die individuelle Kommunikationsinformation angewendet, um die individuelle Synchronisationssequenz (oder die Gesamtheit der Symbole der individuellen Synchronisationssequenz) zu erhalten. In einem dritten Schritt 206 kann die individuelle Synchronisationssequenz dem Datenpaket 120 zugeordnet werden oder optional, wie dies in Fig. 5 beispielhaft gezeigt ist, auf die Mehrzahl von Teildatenpaketen 142 aufgeteilt werden, was in Fig. 5 exemplarisch durch die zwei Teildatenpakete mit den Blöcken von Datensymbolen 146 und Blöcken von Synchronisationssymbolen 144 angedeutet ist.

Mit anderen Worten, Ausgangspunkt ist die individuelle Kommunikationsinformation (z.B. eine zeitveränderliche, numerische Signatur (z.B. CMAC) der Länge M bit). Aus dieser kann in einer geeigneten Abbildungsvorschrift eine Sequenz der Länge N Symbole generiert werden. Mittels einer Zuordnungsvorschrift können die N Symbole auf die für die Nachricht zur Verfügung stehenden Synchronisationsbereiche des Datenpakets 120 oder der Teildatenpakete 142 abgebildet werden.

Die Abbildungsvorschrift kann, je nach Signaturlänge sowie Anzahl und Modulation der Synchronisationssymbole, aus informationstheoretischer Sicht prinzipiell sowohl Redundanz in die numerische Signatur einbringen als auch den Informationsgehalt der Signatur reduzieren. Bei einer Übertragung über gestörte Funkkanäle kann jedoch in bevorzugter Weise durch die Abbildungsvorschrift Redundanz eingebracht werden, um die Signatur auch bei Übertragungsverlust eines oder mehrerer Synchronisationssymbole im Datenempfänger 110 wiederherstellen und verifizieren zu können. Dies kann z.B. durch eine FEC-Kodierung (FEC = forward error correction, dt. Vorwärtsfehlerkorrektur) auf Basis von gängigen Faltungs- oder Turbokodes erfolgen, wie sie für Datenübertragung über gestörte Kanäle gemäß Stand der Technik üblicherweise eingesetzt wird.

Die geeignete Wahl der Abbildungsvorschrift ergibt sich somit vorrangig aus der Länge der Signatur, der Anzahl der zur Verfügung stehenden Synchronisationssymbole und/oder der gewünschten Übertragungssicherheit der Signatur.

Wie auch die individuelle Kommunikationsinformation kann auch die Abbildungsvorschrift sowohl dem Datensender als auch dem Datenempfänger bekannt sein.

Sofern das Datenpaket 120 optional auf die Mehrzahl von Teildatenpakete 142 aufgeteilt wird, kann es sich bei der Zuordnung der Synchronisationssymbole zu den Teildatenpaketen 142 um eine bijektive Abbildung (oder Zuordnung) handeln. Hierbei wird weder Information hinzugefügt noch reduziert. Mit anderen Worten, es kann sich um eine bijektive Abbildung handeln, mit deren Hilfe die Synchronisationssymbole auf den Synchronisationsbereich der Teildatenpakete verteilt werden.

Bei Ausführungsbeispielen kann auf der Datensenderseite oder Datenempfängerseite eine individuelle Kommunikationsinformation (z.B. eine numerische Signatur mit geeigneter Länge) generiert werden und zwischen Datensender und Datenempfänger ausgetauscht werden. Um die Authentisierung möglichst sicher zu gestalten, kann beispielsweise eine dynamische (zeitlich variable) Signatur von hinreichend großer Länge gewählt werden. Hierfür eignet sich z.B. eine CMAC.

Datensenderseitig (oder wellenformseitig) kann die individuelle Synchronisationssequenz (z.B. Synchronisationssymbolsequenz) aus der individuellen Kommunikationsinformation (z.B. o.g. Signatur) mit Hilfe der Abbildungsvorschrift gebildet werden und, sofern Telegram-Splitting verwendet wird, den Teildatenpaketen 142 zugeordnet werden.

Datenempfängerseitig (oder decoderseitig) kann die individuelle Synchronisationssequenz aus der individuellen Kommunikationsinformation (z.B. o.g. Signatur) mit Hilfe der Abbildungsvorschrift gebildet werden und, sofern Telegram-Splitting verwendet wird, den Teildatenpaketen 142 zugeordnet werden. Die Synchronisation der empfangenen Nachricht in Zeit, Phase, Abtastphase, Frequenz und/oder die Kanalschätzung kann auf Basis der individuellen Synchronisationssequenz erfolgen. Die Authentifizierung der empfangenen Nachricht kann zusätzlich durch Rückgewinnung der gesendeten individuellen Kommunikationsinformation (z.B. numerischen Signatur) aus dem empfangenen Signal erfolgen. Gleichwohl diese im Datenempfänger bekannt ist, kann sie durch Demodulation der empfangenen individuellen Synchronisationssequenz und Anwendung der inversen Abbildungsvorschrift (z.B. durch Dekodierung) zusätzlich verifiziert werden. Hierbei wird hinsichtlich der bekannten Sequenz keine Erwartungshaltung ("a-priori Wissen") eingenommen.

### Drittes detailliertes Ausführungsbeispiel

Der Datensender 100 kann ausgebildet sein, um das Datenpaket mit der individuellen Synchronisationssequenz wiederholt auszusenden, also um die Empfangsbestätigung zu wiederholen.

Beispielsweise kann die authentisierte Empfangsbestätigung K-fach mit identischem Inhalt, d.h. identischen Sendesymbolen, gesendet werden. K ist allgemein ein ganzzahliger Wert größer als 1. Die Anzahl der Wiederholungen kann als fester Parameter vorgegeben sein, oder vom Datensender situationsbedingt von Fall zu Fall neu festgelegt werden (dynamische Anzahl von Wiederholungen). Als Basis für die dynamische Festlegung einer Wiederholungszahl kann z.B. eine begrenzte Sendezeit (einzuhaltender Duty Cycle (dt. Arbeitszyklus)) oder die Bewertung der Funkverbindungsqualität zwischen Datensender und Datenempfänger dienen.

Die Wiederholung kann im Falle von schlechten Empfangsbedingungen der Erhöhung der Wahrscheinlichkeit dienen, dass die Empfangsbestätigung im adressierten Datenempfänger fehlerfrei ausgewertet (dekodiert) werden kann. Im Falle guter Empfangsbedingungen kann der Datenempfänger die authentisierte Empfangsbestätigung bereits nach weniger als K empfangenen Aussendungen fehlerfrei auswerten und dadurch das Empfangsmodul vorzeitig stilllegen. Diese Empfängerabschaltung verringert potentiell den Energieverbrauch, was bei batteriebetriebenen Geräten die Batterielebensdauer erhöht.

Wird die authentisierte Empfangsbestätigung in Form von Teildatenpaketen übertragen, so wird bei Wiederholung jedes Teildatenpaket entsprechend erneut übertragen. Die Sendezeitpunkte aller Teildatenpakete sind dem Datenempfänger bekannt.

Bei Ausführungsbeispielen kann auf der Datensenderseite (oder Wellenformseite) die authentisierte Empfangsbestätigung mehrfach z.B. mit identischem Inhalt, d.h. identischen

Sendesymbolen, gesendet werden. Sofern Telegramm-Splitting verwendet wird, müssen bei der Wiederholung des Datenpakets 120 (=Empfangsbestätigung) die wiederholten Teildatenpakete 142 nicht notwendigerweise im gleichen Zeit-/Frequenzraster gesendet werden, sondern können in unterschiedlicher Weise in den verfügbaren Zeit- und Frequenzressourcen gesendet werden. Dies schließt den Fall ein, dass die Wiederholung nicht notwendigerweise nach der ersten Übertragung stattfindet, sondern auch parallel oder zeitlich teilweise überlappend mit der ersten Übertragung durch Nutzung getrennter Zeit-/Frequenzressourcen. Bei dynamischer Festlegung der Wiederholungszahl kann z.B. die Funkverbindungsqualität zwischen Datensender und Datenempfänger und/oder die Einhaltung einer vorgegebenen maximalen Sendeaktivität ("Duty Cycle") als Kriterium dienen.

Bei Ausführungsbeispielen kann auf der Datenempfängerseite (oder Decoderseite) nach jeder Aussendung der Versuch unternommen werden, die authentisierte Empfangsbestätigung auszuwerten (z.B. durch Dekodierung). Im Erfolgsfall kann der Datenempfänger hinsichtlich der noch folgenden Wiederholungen der authentisierten Empfangsbestätigung deaktiviert werden. Gelingt jeweils nach einer erfolgten Aussendung keine erfolgreiche Auswertung, kann der Datenempfänger den bereits übertragenen Informationsgehalt akkumulieren. Dies kann beispielsweise durch sogenanntes "Soft-Bit-Combining" erfolgen.

### Viertes detailliertes Ausführungsbeispiel

Der Datensender 100 kann ausgebildet sein, um das Datenpaket 120 mit einer zusätzlichen Aktivierungsinformation über zumindest ein weiteres vom Datensender 100 zu sendendes Datenpaket zu versehen. Der Datensender 100 kann mit dem Datenpaket 120 also weitere Informationen für künftige Datenpakete (oder Nachrichten) übermitteln.

So kann der Datensender 100 das Datenpaket 120 mit der individuellen Synchronisationssequenz, welches bedingt durch die individuelle Synchronisationssequenz eine Bestätigungsnachricht (oder Empfangsbestätigung) sein kann, mit der Datensender 100 den erfolgreichen Empfang eines vorherigen Datenpakets bestätigt, mit der zusätzlichen Aktivierungsinformation versehen, um den Datenempfänger 110 auf den Empfang zumindest eines weiteren Datenpakets 124 vorzubereiten. Die Aktivierungsinformation kann ein Sendezeitpunkt des zumindest einen weiteren Datenpakets und/oder eine Strukturinformation (z.B. Zeit- und/oder Frequenzsprungmuster, Länge) des zumindest einen weiten Datenpakets sein.

Beispielsweise kann der Datensender 100 neben der eigentlichen Empfangsbestätigung (für eine zeitlich vorangegangene Übertragung) mittels derselben den Datenempfänger 110 zudem auf weitere geplante Nachrichtenübertragungen vorbereiten, die der Datensender 100 nach der Übertragung des Datenpakets 120 (=Empfangsbestätigung) vornehmen wird. Hierbei kann es sich beispielsweise um Informationen hinsichtlich der Struktur, Umfang/Länge sowie des Sendezeitpunktes der geplanten Nachricht handeln. Mit Hilfe dieser Informationen kann sich der Datenempfänger 110 der authentisierten Empfangsbestätigung auf den Empfang der künftigen Nachricht bzw. mehrerer künftigen Nachrichten des Datensenders 100 gezielt vorbereiten.

Mit dieser Maßnahme, beispielsweise der Übermittlung des in der Zukunft liegenden Sendezeitpunktes der künftigen Nachricht(en), kann der Datenempfänger 110 seine Empfangsbereitschaft ggf. bis zum geplanten Sendezeitpunkt deaktivieren und somit Energie sparen.

Weiterhin ist es mit dieser Maßnahme in einem System mit vielen zeitlich prinzipiell unsynchronisierten Datenempfängern (z.B. Sensorknoten) möglich, mehrere Datenempfänger für den Empfang einer gemeinsamen Nachricht ("Broadcast"-Modus) zeitlich zu koordinieren und somit hinsichtlich des Empfangs ein teilsynchrones Verhalten herbeizuführen.

Die weitere Information kann optional zusätzlich kryptografisch geschützt werden, wobei eine von der oben genannten numerischen Signatur abweichende Sequenz zugrunde liegen kann.

Bei Ausführungsbeispielen kann auf der Datensenderseite (oder Wellenformseite) eine Übertragung von zusätzlicher Information im Rahmen der authentisierten Empfangsbestätigung erfolgen, welche dem Datenempfänger 110 relevante Parameter zur Struktur, Umfang/Länge sowie des Sendezeitpunktes künftiger (vom Absender der Empfangsbestätigung) gesendeter weiterer Nachrichten mitteilt. Falls im System eine Übertragung im "Broadcast"-Modus (point-to-multipoint. dt. Punkt zu Mehrpunkt) vorgesehen ist, kann eine zeitliche Synchronisation der Empfangsbereitschaft aller betroffenen Datenempfänger erfolgen.

Bei Ausführungsbeispielen kann auf der Datenempfängerseite (oder Decoderseite) nach einer Extraktion der o.g. Information eine Vorbereitung des Datenempfängers 110 auf die künftig zu erwartende Nachricht(en) des Datensenders 100 (oder Absenders) erfolgen. Ferner kann eine Deaktivierung des Datenempfängers (oder Teilen davon) bis zum Zeitpunkt der angekündigten neuen Nachricht(en) zum Zweck der Energieeinsparung erfolgen.

### Fünftes detailliertes Ausführungsbeispiel

Die Übertragung einer Nachricht (Telegramm) kann optional in Form mehrerer Teildatenpakete 142 erfolgen, welche über die Funkkanalressourcen "Sendezeitpunkt" und/oder "Sendefrequenz" verteilt sein können. Voraussetzung für das im Folgenden beschriebene Ausführungsbeispiel ist es, dass eine Nachricht in Form von mindestens zwei Teildatenpaketen 142 übertragen wird und dass für die Übertragung der Teildatenpakete 142 oder mindestens zwei unterschiedliche Zeit- und/oder Frequenz-Ressourcen zur Verfügung stehen.

Fig. 6 zeigt in einem Diagramm eine Belegung des Übertragungskanals bei der Übertragung eines Datenpakets mittels einer Mehrzahl von Teildatenpaketen 142, die in der Zeit und Frequenz verteilt sind. Mit anderen Worten, Fig. 6 zeigt eine Aufteilung einer Nachricht über mehrere Teildatenpakete 142 in Zeit und Frequenz. Dabei beschreibt die Ordinate die Frequenz und die Abszisse die Zeit.

Die Anordnung der Teildatenpakete 142 einer Nachricht kann als Sprungmuster ("hopping pattern") bezeichnet werden. Bei der Zuteilung der Sprungmuster stehen dem Datensender 100 (Absender der Nachricht) im Rahmen systembedingter Grenzen typischerweise große Freiheitsgrade zur Verfügung. Maßgabe ist, dass das angewandte Sprungmuster im Datenempfänger 110 bekannt ist bzw. vor dem Empfang der Nachricht ermittelt werden kann.

Bezogen auf das Datenpaket 120 mit der individuellen Synchronisationssequenz (= authentisierte Empfangsbestätigung) kann das Sprungmuster auf Basis derselben individuellen Kommunikationsinformation (z.B. numerischen Signatur (z.B. CMAC) dynamisch ausgewählt werden, welche im zweiten detaillierten Ausführungsbeispiel zur Anwendung kommt.

Fig. 7 zeigt in einem Flussdiagramm ein Verfahren 220 zum Generieren eines Zeit- und/oder Frequenzsprungmusters. In einem ersten Schritt 222 kann die individuelle Kommunikationsinformation (z.B. numerische Signatur der Länge M bit, vgl. Fig. 5) bereitgestellt werden. Die individuelle Kommunikationsinformation kann wie oben bereits beschrieben wurde von dem Datensender 100, dem Datenempfänger 110 oder einem anderen Teilnehmer des Systems, wie z.B. einem anderen Datensender, einem anderen Datenempfänger oder einer zentralen Steuereinheit generiert werden. In einem zweiten Schritt 224 kann eine Abbildungsvorschrift auf die individuelle Kommunikationsinformation angewendet werden, um das Zeit- und/oder Frequenzsprungmuster (Sendezeitpunkte und Sendefrequenzen) zu generieren.

Fig. 7 zeigt also die Erzeugung des Sprungmusters (Sendezeitpunkte, Sendefrequenzen) aus der Signatur. Beispielsweise kann die Abbildungsvorschrift aus der jeweiligen individuellen Kommunikationsinformation (numerischen Signatur) die Werte der Sendezeitpunkte und Sendefrequenzen für alle der Nachricht zugehörigen Teildatenpakete 142 berechnen. Dabei ist vorzugsweise anzustreben, dass jede mögliche individuelle Kommunikationsinformation (Signatur) zu einer unterschiedlichen Auswahl der Sendezeitpunkte und Sendefrequenzen führt. Die Abbildungsvorschrift kann im Datensender 100 und Datenempfänger 110 bekannt sein.

Der Vorteil eines dynamischen, signaturabhängigen Sprungmusters ist eine für alle anderen als den adressierten Funkteilnehmer (Datenempfänger 110) unbekannte Anordnung der Teildatenpakete der Nachricht hinsichtlich Sendezeit und Sendefrequenz. Dies erschwert signifikant das ungewünschte Abhören der Nachrichten z. B. durch Mitschneiden der Funkverbindung ("Sniffing") und stellt somit ein zusätzliches Sicherheitsmerkmal dar. Weiterhin kann auch die gezielte Manipulation des Datenempfängers durch unautorisierte (Fremd-)Sender erschwert werden, welche auf der Funkstrecke das Signal des autorisierten Datensenders 100 überlagern bzw. stören.

Bei Ausführungsbeispielen kann auf der Datensenderseite (oder Wellenformseite) eine individuelle Kommunikationsinformation (z.B. numerische Signatur mit einer geeigneten Länge) generiert werden und zwischen Datensender 100 und Datenempfänger 110 ausgetauscht werden, beispielsweise kann die individuelle Kommunikationsinformation eine dynamische (zeitlich variable) Signatur von hinreichend großer Länge sein, wie z.B. eine CMAC (siehe zweites detailliertes Ausführungsbeispiel). Gemäß einer geeigneten Abbildungsvorschrift können die zu sendenden Teildatenpakete auf Basis der individuellen Kommunikationsinformation (z.B. o.g. Signatur) individuell hinsichtlich der Sendezeitpunkte und der Sendefrequenzen verteilt werden.

Bei Ausführungsbeispielen können auf der Datenempfängerseite (oder Decoderseite) die Sendezeitpunkte und Sendefrequenzen aus der individuellen Kommunikationsinformation (z.B. o.g. Signatur) mit Hilfe der im Datenempfänger 110 bekannten Abbildungsvorschrift errechnet werden. Das Empfangsmodul (oder Empfangseinrichtung 116) des Datenempfängers 110 kann dabei so gesteuert werden, dass es die Funksignale zu den gegebenen Zeitpunkten auf den gegebenen Frequenzen erfasst und auswertet.

### Weitere Ausführungsbeispiele

Fig. 8 zeigt ein Flussdiagramm eines Verfahrens 240 zum Senden von Daten an einen Datenempfänger. Das Verfahren 240 umfasst einen Schritt 242 des Generierens einer individuellen Synchronisationssequenz unter Verwendung einer individuellen Kommunikationsinformation, die dem Datensender und dem Datenempfänger bekannt ist. Ferner umfasst das Verfahren 240 einen Schritt 244 des Sendens eines Datenpakets mit der individuellen Synchronisationssequenz zur Synchronisation des Datenpakets in dem Datenempfänger.

Fig. 9 zeigt ein Flussdiagramm eines Verfahrens 260 zum Empfangen von Daten von einem Datensender. Das Verfahren 260 umfasst einen Schritt 262 des Generierens einer individuellen Referenz-Synchronisationssequenz unter Verwendung der individuellen Kommunikationsinformation. Ferner umfasst das Verfahren 260 einen Schritt 264 des Detektierens des Datenpakets in einem Empfangsdatenstrom oder Empfangsdatenpuffer unter Verwendung der individuellen Referenz-Synchronisationssequenz. Ferner umfasst das Verfahren 260 einen Schritt 266 des Empfangens des detektieren Datenpakets.

Ausführungsbeispiele beziehen sich auf einen Datensender, einen Datenempfänger und/oder ein System zur bidirektionalen Übertragung von Daten von vielen Sensorknoten zu einer Basisstation oder in der anderen Richtung von einer/mehrerer Basisstation/en zu einem oder mehreren Sensorknoten.

Bei Ausführungsbeispielen handelt es sich um eine Art der Übertragung, bei welcher der erfolgreiche Empfang einer Nachricht vom Datenempfänger in authentisierter Form bestätigt wird ("Acknowledge") und in welcher der Datenempfänger den Absender der ursprünglichen Nachricht mit der Empfangsbestätigung gleichzeitig relevante Informationen für das optionale Aussenden weiterer Daten mit separater Nachricht im Anschluss an die Bestätigungsnachricht zuleitet.

Bei Ausführungsbeispielen kann ein erfolgreicher Empfang einer von Teilnehmer A an Teilnehmer B gesendeten Nachricht bestätigt werden. Manche Ausführungsbeispiele beziehen sich dabei auf die authentisierte Bestätigung des Empfangs durch Teilnehmer B (vgl. Fig. 3).

Bei Ausführungsbeispielen kann eine Authentisierung einer Bestätigungsnachricht (z.B. von Teilnehmer B zu Teilnehmer A) durch Aussenden einer Synchronisationssequenz zur Frequenz-, Phasen und Kanalschätzung erfolgen, deren Inhalt in dem System neben dem Absender (Teilnehmer B) nur dem jeweils adressierten Datenempfänger (Teilnehmer A) bekannt ist.

Bei Ausführungsbeispielen kann eine Ableitung/Berechnung der o.g. Synchronisationssequenz auf Basis einer sowohl im Datensender (Teilnehmer B) als auch im Datenempfänger (Teilnehmer A) bekannten numerischen Signatur erfolgen.

Bei Ausführungsbeispielen kann eine ein- oder mehrmalige Wiederholung der gesamten authentifizierten Bestätigungsnachricht erfolgen, um die Wahrscheinlichkeit einer erfolgreichen Übertragung derselben zu erhöhen. Die authentisierte Bestätigungsnachricht kann so ausgestaltet sein, dass auch ohne deren Wiederholung ein vollständiger Empfang der Nachricht möglich ist.

Bei Ausführungsbeispielen können weitere Informationen mit der Bestätigungsnachricht übertragen werden, welche Teilnehmer A Informationen insbesondere über Zeitpunkt und Länge einer optionalen künftigen Nachrichtensendung durch Teilnehmer B übermitteln, wodurch Teilnehmer A sein Empfängermodul gezielt zum vereinbarten Zeitpunkt aktivieren kann.

Bei Ausführungsbeispielen kann der Datensender ausgebildet sein, um eine authentisierte Empfangsbestätigung einer zuvor empfangenen Nachricht zu senden.

Bei Ausführungsbeispielen kann durch die Verwendung der (z.B. nur dem Datensender und Datenempfänger bekannten) Authentifizierungsinformation der vorherigen Nachricht eine Datenersparnis erzielt werden, da eine Übertragung einer neuen Authentifizierungsinformation nicht erforderlich ist.

Bei Ausführungsbeispielen kann es sich bei der Authentifizierungsinformation um eine kryptographische Signatur auf Basis der vorherigen Nachricht handeln. Beispielsweise kann es sich bei der Authentifizierungsinformation um eine CMAC auf Basis der vorherigen Nachricht handeln.

Bei Ausführungsbeispielen können die Synchronisationssymbole durch eine Abbildungsvorschrift aus der Authentifizierungsinformation generiert werden.

Beispielsweise kann die Abbildungsvorschrift auf einer FEC (z. B. ein Hamming-Code oder Faltungscode) basieren. Zum Beispiel kann die bekannte Authentifizierungsinformation zusammen mit den Daten der FEC unterzogen werden, wobei ein gewisser Teil der generierten Daten nur durch die Authentifizierungsinformation definiert wird.

Beispielsweise kann auch nur ein Teil der Authentifizierungsinformation für die Generierung der Synchronisationssymbole verwendet werden.

Bei Ausführungsbeispielen können neben der authentisierten Empfangsbestätigung weitere Informationen über folgende (Teil-)Datenpakete (Länge, Sprungmuster, ...) in dem Paket übertragen werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt wird.

## Patentansprüche

1. Datensender (100) zum Senden von Daten an einen Datenempfänger (110), wobei dem Datensender (100) und dem Datenempfänger (110) eine individuelle Kommunikationsinformation bekannt ist, wobei der Datensender (100) ausgebildet ist, um eine individuelle Synchronisationssequenz unter Verwendung der individuellen Kommunikationsinformation zu generieren, und um ein zu sendendes Datenpaket (120) mit der individuellen Synchronisationssequenz zur Synchronisation des Datenpakets (120) in dem Datenempfänger (110) zu versehen;
charakterisiert dadurch, dass die individuelle Kommunikationsinformation eine den Datensender authentisierende Information und/oder ein Datenpaket (120) des Datensenders authentisierende Information ist,
wobei die individuelle Kommunikationsinformation nur
- dem Datensender (100) und dem Datenempfänger (110), oder
- dem Datensender (100) und einer Gruppe von Datenempfängern bekannt ist.

2. Datensender (100) nach Anspruch 1, wobei der Datensender (100) ausgebildet ist, um die individuelle Synchronisationssequenz aus der individuellen Kommunikationsinformation unter Verwendung einer Abbildungsvorschrift zu erzeugen.

3. Datensender (100) nach einem der Ansprüche 1 bis 2, wobei der Datensender (100) ausgebildet ist, um dem Datenempfänger (110) ein Datenpaket (120) mit der Kommunikationsinformation vorab zu senden oder die Kommunikationsinformation vorab von dem Datenempfänger (110) zu erhalten.

4. Datensender (100) nach einem der Ansprüche 1 bis 3, wobei der Datensender (100) ausgebildet ist, um die Kommunikationsinformation nach jedem Datenpaket oder einem gewissen Zeitintervall zu erneuern.

5. Datensender (100) nach einem der Ansprüche 1 bis 4, wobei die Kommunikationsinformation eine Signatur ist.

6. Datensender (100) nach einem der Ansprüche 1 bis 5, wobei die Kommunikationsinformation ein Chiffre basierter Nachrichtenauthentifizierungscode ist.

7. Datensender (100) nach einem der Ansprüche 1 bis 6, wobei der Datensender (100) ausgebildet ist, um das Datenpaket (120) in eine Mehrzahl von Teildatenpaketen (142) aufzuteilen, und um die Mehrzahl von Teildatenpaketen (142) in der Zeit und/oder Frequenz verteilt zu dem Datenempfänger (110) zu senden.

8. Datensender (100) nach einem der Ansprüche 1 bis 7, wobei der Datensender (100) ausgebildet ist, um das Datenpaket (120) mit der individuellen Synchronisationssequenz wiederholt auszusenden.

9. Datensender (100) nach einem der Ansprüche 1 bis 8, wobei das Datenpaket (120) mit der individuellen Synchronisationssequenz durch die individuelle Synchronisationssequenz eine Bestätigungsnachricht ist, die der Datensender (100) ansprechend auf einen korrekten Empfang eines vorherigen Datenpakets sendet.

10. Datensender (100) nach einem der Ansprüche 1 bis 9, wobei der Datensender (100) ausgebildet ist, um das Datenpaket (120) mit einer zusätzlichen Aktivierungsinformation über zumindest ein weiteres vom Datensender (100) zu sendendes Datenpaket zu versehen.

11. Datenempfänger (110) zum Empfangen von Daten von einem Datensender (100), die von dem Datensender (100) in einem Datenpaket (120) gesendet werden, wobei das Datenpaket (120) mit einer individuellen Synchronisationssequenz versehen ist, die unter Verwendung einer individuellen Kommunikationsinformation erzeugt ist, die dem Datensender (100) und dem Datenempfänger (110) bekannt ist, wobei der Datenempfänger (110) ausgebildet ist, um eine individuelle Referenz-Synchronisationssequenz unter Verwendung der Kommunikationsinformation zu generieren, und um das zu empfangene Datenpaket (120) unter Verwendung der individuellen Referenz-Synchronisationssequenz in einem Empfangsdatenstrom oder Empfangsdatenpuffer zu detektieren;
charakterisiert dadurch, dass die individuelle Kommunikationsinformation eine den Datensender (100) authentisierende Information und/oder ein Datenpaket (120) des Datensenders (100) authentisierende Information ist;
wobei die individuelle Kommunikationsinformation nur
- dem Datensender (100) und dem Datenempfänger (110), oder
- dem Datensender (100) und einer Gruppe von Datenempfängern bekannt ist.

12. Datenempfänger (110) nach Anspruch 11, wobei der Datenempfänger (110) ausgebildet ist, um von dem Datensender (100) ein Datenpaket (120) mit der Kommunikationsinformation vorab zu empfangen oder dem Datensender (100) ein Datenpaket mit der Kommunikationsinformation vorab zu senden.

13. Datenempfänger (110) nach einem der Ansprüche 11 bis 12, wobei die Kommunikationsinformation eine Signatur ist.

14. Datenempfänger (110) nach einem der Ansprüche 11 bis 13, wobei die Kommunikationsinformation ein Chiffre basierter Nachrichtenauthentifizierungscode ist.

15. Datenempfänger (110) nach einem der Ansprüche 11 bis 14, wobei das Datenpaket (120) in eine Mehrzahl von Teildatenpaketen (142) aufgeteilt gesendet wird, wobei die Mehrzahl von Teildatenpaketen in der Zeit und/oder Frequenz verteilt gesendet werden;
wobei der Datenempfänger (110) ausgebildet ist, um die Mehrzahl von Teildatenpaketen (142) zu empfangen und zu kombinieren, um das Datenpaket (120) zu erhalten.

16. Datenempfänger (110) nach einem der Ansprüche 11 bis 15, wobei der Datenempfänger (110) ausgebildet ist, um die individuelle Referenz-Synchronisationssequenz unter Verwendung einer Abbildungsvorschrift zu erzeugen.

17. Datenempfänger (110) nach einem der Ansprüche 11 bis 16, wobei das Datenpaket (120) mit einer zusätzlichen Aktivierungsinformation über zumindest ein weiteres vom Datensender (100) zu sendendes Datenpaket versehen ist;
wobei der Datenempfänger (110) ausgebildet ist, um das zumindest eine weitere Datenpaket unter Verwendung der Aktivierungsinformation zu empfangen.

18. System, mit folgenden Merkmalen:
einem Datensender (100) nach einem der Ansprüche 1 bis 10; und
einem Datenempfänger (110) nach einem der Ansprüche 11 bis 17.

19. Verfahren (260) zum Empfangen von Daten von einem Datensender, die von dem Datensender in einem Datenpaket gesendet werden, wobei das Datenpaket mit einer individuellen Synchronisationssequenz versehen ist, die unter Verwendung einer individuellen Kommunikationsinformation erzeugt ist, die dem Datensender und dem Datenempfänger bekannt ist, wobei das Verfahren aufweist:
Generieren (262) einer individuellen Referenz-Synchronisationssequenz unter Verwendung der individuellen Kommunikationsinformation;
Detektieren (264) des Datenpakets in einem Empfangsdatenstrom oder Empfangsdatenpuffer unter Verwendung der individuellen Referenz-Synchronisationssequenz; und
Empfangen (266) des detektieren Datenpakets;
charakterisiert dadurch, dass die individuelle Kommunikationsinformation eine den Datensender authentisierende Information und/oder ein Datenpaket (120) des Datensenders authentisierende Information ist,
wobei die individuelle Kommunikationsinformation nur
- dem Datensender (100) und dem Datenempfänger (110), oder
- dem Datensender (100) und einer Gruppe von Datenempfängern bekannt ist.

20. Verfahren (240) zum Senden von Daten an einen Datenempfänger, wobei das Verfahren aufweist:
Generieren (242) einer individuellen Synchronisationssequenz unter Verwendung einer individuellen Kommunikationsinformation, die dem Datensender und dem Datenempfänger bekannt ist;
Versehen eines zu sendenden Datenpakets mit der individuellen Synchronisationssequenz zur Synchronisation des Datenpakets in dem Datenempfänger; und
Senden (244) des Datenpakets mit der individuellen Synchronisationssequenz zur Synchronisation des Datenpakets in dem Datenempfänger;
charakterisiert dadurch, dass die individuelle Kommunikationsinformation eine den Datensender authentisierende Information und/oder ein Datenpaket (120) des Datensenders authentisierende Information ist;
wobei die individuelle Kommunikationsinformation nur
- dem Datensender (100) und dem Datenempfänger (110), oder
- dem Datensender (100) und einer Gruppe von Datenempfängern bekannt ist.

21. Verfahren nach Anspruch 20
wobei der Datenempfänger ein erster Teilnehmer eines Kommunikationssystems ist,
wobei der Datensender ein zweiter Teilnehmer des Kommunikationssystems ist,
wobei die Daten eine authentisierte Empfangsbestätigung sind, wobei die authentisierte Empfangsbestätigung den Empfang eines vorausgehenden Datenpakets bestätigt, welches von dem ersten Teilnehmer des Kommunikationssystems gesendet wird,
wobei das Verfahren ferner aufweist: Empfangen des vorausgehenden Datenpakets mit dem zweiten Teilnehmer des Kommunikationssystems,
wobei das Datenpaket mit der individuellen Synchronisationssequenz von dem zweiten Teilnehmer an den ersten Teilnehmer bei einem erfolgreichen Empfang des vorausgehenden Datenpakets gesendet wird, wobei die individuelle Synchronisationssequenz dem ersten Teilnehmer und den zweiten Teilnehmer individuell für die gegenseitige Kommunikation zugeordnet ist;

22. Computerprogramm zur Durchführung des Verfahrens nach einem der Ansprüche 19 bis 21.

## Claims

1. Data transmitter (100) for transmitting data to a data receiver (110), individual communication information being known to the data transmitter (100) and to the data receiver (110), the data transmitter (100) being configured to generate an individual synchronization sequence while using said individual communication information and to provide a data packet (120) to be transmitted with the individual synchronization sequence for synchronizing the data packet (120) in the data receiver (110);
**characterized in that** said individual communication information is information which authenticates the data transmitter and/or information which authenticates a data packet (120) of the data transmitter,
said individual communication information being known only
- to the data transmitter (100) and to the data receiver (110), or
- to the data transmitter (100) and to a group of data receivers.

2. Data transmitter (100) as claimed in claim 1, the data transmitter (100) being configured to generate the individual synchronization sequence from the individual communication information while using a mapping specification.

3. Data transmitter (100) as claimed in any of claims 1 to 2, the data transmitter (100) being configured to transmit in advance a data packet (120) containing the communication information to the data receiver (110) or to receive in advance the communication information from the data receiver (110).

4. Data transmitter (100) as claimed in any of claims 1 to 3, the data transmitter (100) being configured to renew the communication information after each data packet or a certain time interval.

5. Data transmitter (100) as claimed in any of claims 1 to 4, wherein the communication information is a signature.

6. Data transmitter (100) as claimed in any of claims 1 to 5, wherein the communication information is a cipher-based message authentication code.

7. Data transmitter (100) as claimed in any of claims 1 to 6, the data transmitter (100) being configured to divide the data packet (120) into a plurality of sub-data packets (142) and to transmit the plurality of sub-data packets (142) distributed in time and/or frequency to the data receiver (110).

8. Data transmitter (100) as claimed in any of claims 1 to 7, the data transmitter (100) being configured to repeatedly transmit the data packet (120) with the individual synchronization sequence.

9. Data transmitter (100) as claimed in any of claims 1 to 8, the data packet (120) with the individual synchronization sequence being a confirmation message due to the individual synchronization sequence which the data transmitter (100) transmits in response to a correct receipt of a preceding data packet.

10. Data transmitter (100) as claimed in any of claims 1 to 9, the data transmitter (100) being configured to provide the data packet (120) with additional activation information about at least one further data packet to be transmitted from the data transmitter (100).

11. Data receiver (110) for receiving data from a data transmitter (100) transmitted by the data transmitter (100) in a data packet (120), the data packet (120) being provided with an individual synchronization sequence generated while using individual communication information known to the data transmitter (100) and the data receiver (110), the data receiver (110) being configured to generate an individual reference synchronization sequence while using the communication information and to detect the data packet (120) to be received while using the individual reference synchronization sequence in a receive data stream or receive data buffer;
**characterized in that** said individual communication information is information which authenticates the data transmitter (100) and/or information which authenticates a data packet (120) of the data transmitter (100),
said individual communication information being known only
- to the data transmitter (100) and to the data receiver (110), or
- to the data transmitter (100) and to a group of data receivers.

12. Data receiver (110) as claimed in claim 11, the data receiver (110) being configured to receive a data packet (120) containing the communication information in advance from the data transmitter (100) or to transmit a data packet containing the communication information in advance to the data transmitter (100).

13. Data receiver (110) as claimed in any of claims 11 to 12, wherein the communication information is a signature.

14. Data receiver (110) as claimed in any of claims 11 to 13, wherein the communication information is a cipher-based message authentication code.

15. Data receiver (110) as claimed in any of claims 11 to 14, wherein the data packet (120) is transmitted divided into a plurality of sub-data packets (142), the plurality of sub-data packets being transmitted distributed in time and/or frequency;
said data receiver (110) being configured to receive and combine the plurality of sub-data packets (142) to obtain the data packet (120).

16. Data receiver (110) as claimed in any of claims 11 to15, the data receiver (110) being configured to generate the individual reference synchronization sequence while using a mapping rule.

17. Data receiver (110) as claimed in any of claims 11 to 16, the data packet (120) being provided with additional activation information about at least one further data packet to be transmitted by the data transmitter (100);
said data receiver (110) being configured to receive the at least one further data packet while using the activation information.

18. System, comprising the following features:
a data transmitter (100) as claimed in any of claims 1 to 10; and
a data receiver (110) as claimed in any of claims 11 to 17.

19. Method (260) for receiving data from a data transmitter transmitted by the data transmitter in a data packet, the data packet being provided with an individual synchronization sequence generated while using individual communication information known to the data transmitter and the data receiver, the method comprising:
generating (262) an individual reference synchronization sequence while using the individual communication information;
detecting (264) the data packet in a receive data stream or receive data buffer while using the individual reference synchronization sequence; and
receiving (266) the detected data packet;
**characterized in that** said individual communication information is information which authenticates the data transmitter and/or information which authenticates a data packet (120) of the data transmitter,
said individual communication information being known only
- to the data transmitter (100) and to the data receiver (110), or
- to the data transmitter (100) and to a group of data receivers.

20. Method (240) for transmitting data to a data receiver, the method comprising:
generating (242) an individual synchronization sequence while using individual communication information known to the data transmitter and the data receiver; and
providing a data packet to be transmitted with the individual synchronization sequence for synchronizing the data packet in the data receiver;
transmitting (244) the data packet containing the individual synchronization sequence for synchronizing the data packet in the data receiver;
**characterized in that** said individual communication information is information which authenticates the data transmitter and/or information which authenticates a data packet (120) of the data transmitter,
said individual communication information being known only
- to the data transmitter (100) and to the data receiver (110), or
- to the data transmitter (100) and to a group of data receivers.

21. Method as claimed in claim 20,
wherein the data receiver is a first subscriber of a communication system,
wherein the data transmitter is a second subscriber of a communication system,
wherein the data are an authenticated confirmation of receipt, the authenticated confirmation of receipt confirming the receipt of a preceding data packet transmitted by a first subscriber of a communication system,
the method further comprising: receiving the preceding data packet with the second subscriber of the communication system,
the data packet having an individual synchronization sequence being transmitted from the second subscriber to the first subscriber upon successful receipt of the preceding data packet, the individual synchronization sequence being individually assigned to the first subscriber and the second subscriber for mutual communication.

22. Computer program for carrying out the method as claimed in any of claims 19 to 21.

## Revendications

1. Emetteur de données (100) destiné à envoyer des données à un récepteur de données (110), dans lequel une information de communication individuelle est connue de l'émetteur de données (100) et du récepteur de données (110), destiné à envoyer des données à un récepteur de données (110), dans lequel l'émetteur de données (100) est conçu pour générer une séquence de synchronisation individuelle à l'aide de l'information de communication individuelle, et pour pourvoir un paquet de données (120) à envoyer de la séquence de synchronisation individuelle pour la synchronisation du paquet de données (120) dans le récepteur de données (110);
**caractérisé par le fait que** l'information de communication individuelle est une information authentifiant l'émetteur de données et/ou une information authentifiant un paquet de données (120) de l'émetteur des données,
dans lequel l'information de communication individuelle est connue uniquement
- de l'émetteur de données (100) et du récepteur de données (110), ou
- de l'émetteur de données (100) et d'un groupe de récepteurs de données.

2. Emetteur de données (100) selon la revendication 1, dans lequel l'émetteur de données (100) est conçu pour générer la séquence de synchronisation individuelle à partir de l'information de communication individuelle à l'aide d'une règle de reproduction.

3. Emetteur de données (100) selon l'une des revendications 1 à 2, dans lequel l'émetteur de données (100) est conçu pour envoyer au récepteur de données (110) au préalable un paquet de données (120) avec l'information de communication ou pour recevoir l'information de communication au préalable du récepteur de données (110).

4. Emetteur de données (100) selon l'une des revendications 1 à 3, dans lequel l'émetteur de données (100) est conçu pour renouveler l'information de communication après chaque paquet de données ou après un certain intervalle de temps.

5. Emetteur de données (100) selon l'une des revendications 1 à 4, dans lequel l'information de communication est une signature.

6. Emetteur de données (100) selon l'une des revendications 1 à 5, dans lequel l'information de communication est un code d'authentification de message sur base d'un chiffre.

7. Emetteur de données (100) selon l'une des revendications 1 à 6, dans lequel l'émetteur de données (100) est conçu pour diviser le paquet de données (120) en une pluralité de paquets de données partiels (142) et pour envoyer la pluralité de paquets de données partiels (142) répartis dans le temps et/ou en fréquence au récepteur de données (110).

8. Emetteur de données (100) selon l'une des revendications 1 à 7, dans lequel l'émetteur de données (100) est conçu pour émettre de manière répétée le paquet de données (120) avec la séquence de synchronisation individuelle.

9. Emetteur de données (100) selon l'une des revendications 1 à 8, dans lequel le paquet de données (120) avec la séquence de synchronisation individuelle est, par la séquence de synchronisation individuelle, un message d'accusé de réception que l'émetteur de données (100) envoie en réponse à une réception correcte d'un paquet de données précédent.

10. Emetteur de données (100) selon l'une des revendications 1 à 9, dans lequel l'émetteur de données (100) est conçu pour pourvoir le paquet de données (120) d'une information d'activation additionnelle relative à au moins un autre paquet de données à envoyer par l'émetteur de données (100).

11. Récepteur de données (110) destiné à recevoir des données d'un émetteur de données (100) qui sont envoyées par l'émetteur de données (100) dans un paquet de données (120), dans lequel le paquet de données (120) est pourvu d'une séquence de synchronisation individuelle qui est générée à l'aide d'une information de communication individuelle qui est connue de l'émetteur de données (100) et du récepteur de données (110), dans lequel le récepteur de données (110) est conçu pour générer une séquence de synchronisation de référence individuelle à l'aide de l'information de communication, et pour détecter le paquet de données à recevoir (120) à l'aide de la séquence de synchronisation de référence individuelle dans un flux de données de réception ou un tampon de données de réception;
**caractérisé par le fait que** l'information de communication individuelle est une information authentifiant l'émetteur de données (100) et/ou une information authentifiant un paquet de données (120) de l'émetteur des données (100),
dans lequel l'information de communication individuelle est connue uniquement
- de l'émetteur de données (100) et du récepteur de données (110), ou
- de l'émetteur de données (100) et d'un groupe de récepteurs de données.

12. Récepteur de données (110) selon la revendication 11, dans lequel le récepteur de données (110) est conçu pour recevoir de l'émetteur de données (100) au préalable un paquet de données (120) avec l'information de communication ou pour envoyer à l'émetteur de données (100) au préalable un paquet de données avec l'information de communication.

13. Récepteur de données (110) selon l'une des revendications 11 à 12, dans lequel l'information de communication est une signature.

14. Récepteur de données (110) selon l'une des revendications 11 à 13, dans lequel l'information de communication est un code d'authentification de message à base de chiffre.

15. Récepteur de données (110) selon l'une des revendications 11 à 14, dans lequel le paquet de données (120) est envoyé divisé en une pluralité de paquets de données partiels (142), dans lequel la pluralité de paquets de données partiels est envoyé réparti dans le temps et/ou en fréquence;
dans lequel le récepteur de données (110) est conçu pour recevoir et combiner la pluralité de paquets de données partiels (142) pour obtenir le paquet de données (120).

16. Récepteur de données (110) selon l'une des revendications 11 à 15, dans lequel le récepteur de données (110) est conçu pour générer la séquence de synchronisation de référence individuelle à l'aide d'une règle de reproduction.

17. Récepteur de données (110) selon l'une des revendications 11 à 16, dans lequel le paquet de données (120) est pourvu d'une information d'activation additionnelle relative à au moins un autre paquet de données à envoyer par l'émetteur de données (100);
dans lequel le récepteur de données (110) est conçu pour recevoir l'au moins un autre paquet de données à l'aide de l'information d'activation.

18. Système, aux caractéristiques suivantes:
un émetteur de données (100) selon l'une des revendications 1 à 10; et
un récepteur de données (110) selon l'une des revendications 11 à 17.

19. Procédé (260) pour recevoir des données d'un émetteur de données qui sont envoyées par l'émetteur de données dans un paquet de données, dans lequel le paquet de données est pourvu d'une séquence de synchronisation individuelle qui est générée à l'aide d'une information de communication individuelle qui est connue de l'émetteur de données et du récepteur de données, dans lequel le procédé présente le fait de:
générer (262) une séquence de synchronisation de référence individuelle à l'aide de l'information de communication individuelle;
détecter (264) le paquet de données dans un flux de données de réception ou un tampon de données de réception à l'aide de la séquence de synchronisation de référence individuelle; et
recevoir (266) le paquet de données détecté;
**caractérisé par le fait que** l'information de communication individuelle est une information authentifiant l'émetteur de données et/ou une information authentifiant un paquet de données (120) de l'émetteur de données,
dans lequel l'information de communication individuelle est connue uniquement
- de l'émetteur de données (100) et du récepteur de données (110), ou
- de l'émetteur de données (100) et d'un groupe de récepteurs de données.

20. Procédé (240) pour envoyer des données à un récepteur de données, dans lequel le procédé présente le fait de:
générer (242) une séquence de synchronisation individuelle à l'aide d'une information de communication individuelle qui est connue de l'émetteur de données et du récepteur de données;
pourvoir un paquet de données à envoyer de la séquence de synchronisation individuelle pour la synchronisation du paquet de données dans le récepteur de données; et
envoyer (244) le paquet de données avec la séquence de synchronisation individuelle pour la synchronisation du paquet de données dans le récepteur de données;
**caractérisé par le fait que** l'information de communication individuelle est une information authentifiant l'émetteur de données et/ou une information authentifiant un paquet de données (120) de l'émetteur de données;
dans lequel l'information de communication individuelle est connue uniquement
- de l'émetteur de données (100) et du récepteur de données (110), ou
- de l'émetteur de données (100) et d'un groupe de récepteurs de données.

21. Procédé selon la revendication 20,
dans lequel le récepteur de données est un premier participant d'un système de communication,
dans lequel l'émetteur de données est un deuxième participant du système de communication,
dans lequel les données sont un accusé de réception authentifié, dans lequel l'accusé de réception authentifié confirme la réception d'un paquet de données précédent qui est envoyé par le premier participant du système de communication,
dans lequel le procédé présente par ailleurs le fait de: recevoir le paquet de données précédent avec le deuxième participant du système de communication,
dans lequel le paquet de données avec la séquence de synchronisation individuelle est envoyé par le deuxième participant au premier participant lors d'une réception fructueuse du paquet de données précédent, dans lequel la séquence de synchronisation individuelle est associée de manière individuelle au premier participant et au deuxième participant pour une communication réciproque.

22. Programme d'ordinateur pour la mise en oeuvre du procédé selon l'une des revendications 19 à 21.
